# EUROPEAN PATENT SPECIFICATION

(11) **EP 2 775 743 B1**
(45) Date of publication and mention of the grant of the patent: **09.09.2020**
(21) Application number: 12888211.5
(22) Date of filing: 31.12.2012
(51) Int. Cl.: H04M 3/42, H04W 4/16, H04M 3/46, H04M 3/00

(54) **COMMUNICATION PROCESSING METHOD AND DEVICE, AND TERMINAL**
KOMMUNIKATIONSVERARBEITUNGSVERFAHREN UND VORRICHTUNG SOWIE ENDGERÄT
PROCÉDÉ ET DISPOSITIF DE TRAITEMENT DE COMMUNICATION, ET TERMINAL

(43) Date of publication of application: 10.09.2014
(73) Proprietor: Huawei Technologies Co., Ltd., Longgang District Shenzhen, Guangdong 518129 (CN)
(72) Inventor: ZHU, Jiaqi, Shenzhen Guangdong 518129 (CN)
(74) Representative: Thun, Clemens
(86) International application number: PCT/CN2012/087993
(87) International publication number: WO 2014/101166

(56) References cited:
- WO-A2-03/030517
- CN-A- 101 695 156
- CN-A- 101 998 315
- CN-A- 102 244 700
- US-A1- 2002 046 299
- US-A1- 2003 063 733
- US-A1- 2009 028 358
- US-A1- 2011 317 684

## Description

### TECHNICAL FIELD

Embodiments of the present invention relate to the field of communications, and in particular, to a communication processing method and apparatus, and a terminal.

### BACKGROUND

With the development of network technologies, manners of performing instant messaging through a network are more and more widespread, and voice over IP is one of them. When two terminals use a same network chat application, users of the two terminals can have an audio or a video chat through the network chat application.

One account of the network chat application can log in to a server through a plurality of different terminals, and in this case, a same account corresponds to a plurality of login terminals. When a called user corresponds to a plurality of login terminals, an application server may initiate a call to a certain login terminal according to setting of the called user, or initiate a call to the plurality of login terminals simultaneously by adopting a simultaneous ringing technology.

However, in the prior art, no matter whether an application server initiates a call to a certain login terminal or initiates a call to a plurality of login terminals simultaneously by adopting a simultaneous ringing technology, a called terminal must be a login terminal of a called user, that is, the called user can communicate only after logging in to the server through the terminal. If a user forgets to log in or cannot log in due to a signal problem, communication cannot be performed or an incoming call is missed.

US 2011/317684 A1 recites an IP telephony service which allows customers to form user groups. Each user group can include multiple telephony devices that are associated with one or more users. One or more group identifiers would be associated with each user group. When an incoming communication is directed to a user group, a group identifier is used to retrieve a list of the members of the group, or a list of devices that correspond to the members of the user group. The communication is then sent to one or more members of the group, or to one or more of the devices that correspond to members of the user group.

US 2003/063733 A1 recites a Service Control Point (SCP) having a call list associated with the main telephone number of a called party. When a calling party attempts to contact the called party by calling the main number, a Service Switching Point (SSP) or a Mobile Switching Center (MSC) fires a trigger. The trigger causes the SCP to access the call list and to cause the SSP/MSC to simultaneously ring the main (called) telephone number and at least one alternative telephone number associated with the main telephone number. A simultaneous ring service subscriber can remotely access the SCP to modify a call list, to add or delete a call list and to select an active call list. When a subscriber has multiple call lists, the subscriber can set account parameters to automatically select the active call list, based on various call factors, such as call time and calling party.

### SUMMARY

Embodiments of the present invention provide a communication processing method and apparatus, and a terminal, so as to solve a problem that a called terminal must be a login terminal of a called user so that communication cannot be performed or an incoming call is missed.

In a first aspect, a communication processing method includes:
receiving, by an application server, a communication request including a called user identifier and sent by a calling user, wherein the calling user is logged in to the application server;
searching by the application server, according to the called user identifier, for all terminals corresponding to the called user identifier, where the all terminals include a terminal through which a called user has logged in to the application server by using the called user identifier and the called user does not log in to the application server currently, wherein the all terminals further comprise a terminal through which the called user log in to the application server currently, and wherein the application server is maintaining information of the called user about performing login through a plurality of terminals by learning one or more terminals through which the called user currently logs in, and learning one or more terminals through which the called user previously logged in; and
sending, by the application server, the communication request to all communicable terminals of the all terminals, wherein a communicable terminal is a terminal capable of receiving a communication request.

In a first possible implementation manner of the first aspect, the all communicable terminals are the all terminals.

In a second possible implementation manner of the first aspect, the method further includes: before the sending, by the application server, the communication request to all communicable terminals of the all communication terminals, searching for, by the application server, all communicable terminals of the all terminals according to each piece of preset information received from the all terminals, where each terminal of the all terminals corresponds to one piece of the preset information, wherein the preset information is used for indicating whether a terminal is a communicable terminal.

With reference to the second possible implementation manner of the first aspect, in a third possible implementation manner, the preset information includes:
first instruction information used for indicating whether a terminal in a login state or non-login state is a communicable terminal; or, second instruction information used for indicating whether a terminal in a network disconnected state or network connected state is a communicable terminal; or, third instruction information used for indicating that if location information of a terminal is within a preset range, the terminal is a communicable terminal; or, fourth instruction information used for indicating that if a network environment of a terminal conforms to a preset condition, the terminal is a communicable terminal.

With reference to the first aspect or the first possible implementation manner of the first aspect or the second possible implementation manner of the first aspect or the third possible implementation manner of the first aspect, in a fourth possible implementation manner, the sending, by the application server, the communication request to all communicable terminals of the all communication terminals includes:
sending, by the application server, the communication request to the all communicable terminals simultaneously; or
sending, by the application server, the communication request sequentially to each terminal of the all communicable terminals according to a preset sequence and a preset time interval until the communication request is responded.

In a second aspect, an application server includes:
a first receiving module, configured to receive a communication request including a called user identifier and sent by a calling user, wherein the calling user is logged in to the application server;
a first searching module, configured to search, according to the called user identifier received by the first receiving module, for all terminals corresponding to the called user identifier, where the all terminals include a terminal through which a called user has logged in to the application server by using the called user identifier and the called user does not log in to the application server currently, wherein the all terminals further comprise a terminal through which the called user log in to the application server currently, and wherein the application server is configured to maintain information of the called user about performing login through a plurality of terminals by learning one or more terminals through which the called user currently logs in, and learning one or more terminals through which the called user previously logged in; and
a first sending module, configured to send the communication request to all communicable terminals of the all terminals found, through searching, by the first searching module, wherein a communicable terminal is a terminal capable of receiving a communication request.

In a first possible implementation manner of the second aspect, the all communicable terminals are the all terminals.

In a second possible implementation manner of the second aspect, the apparatus further includes: a second searching module, where
the second searching module is configured to, before the first sending module sends the communication request to all communicable terminals of the all communication terminals, search for all communicable terminals of the all terminals according to each piece of preset information received from the all terminals, where each terminal of the all terminals corresponds to one piece of the preset information, wherein the preset information is used for indicating whether a terminal is a communicable terminal.

With reference to the second aspect or the first possible implementation manner of the second aspect or the second possible implementation manner of the second aspect, in a third possible implementation manner, the first sending module includes: a sending unit and a sending instruction unit, where
the sending unit is configured to send the communication request to the all communicable terminals; and
the sending instruction unit is configured to instruct the sending unit to send the communication request to the all communicable terminals simultaneously; or configured to instruct the sending unit to send the communication request sequentially to each terminal of the all communicable terminals according to a preset sequence and a preset time interval until the communication request is responded.

In the embodiments of the present invention, after receiving a communication request sent by a calling user, an application server may find, through searching, all terminals corresponding to a called user, which include a terminal which corresponds to the called user and does not log in currently, and send the communication request to a communicable terminal of the all terminals. Therefore, a terminal which logged in previously but does not log in currently is also enabled to receive the communication request sent by the calling user, so as to optimize user experience.

### BRIEF DESCRIPTION OF DRAWINGS

To describe the technical solutions in the embodiments of the present invention more clearly, the following briefly introduces accompanying drawings required for describing the embodiments. Apparently, the accompanying drawings in the following description show merely some embodiments of the present invention, and a person of ordinary skill in the art may still derive other drawings according to these accompanying drawings without creative efforts.
FIG. 1 is a flow chart of a communication processing method according to an embodiment of the present invention;
FIG. 2 is a flow chart of another communication processing method according to an embodiment of the present invention;
FIG. 3 is a flow chart of another communication processing method according to an embodiment of the present invention;
FIG. 4 is a signaling interaction diagram of a communication processing method according to an embodiment of the present invention;
FIG. 5 is a signaling interaction diagram of another communication processing method according to an embodiment of the present invention;
FIG. 6 is a signaling interaction diagram of another communication processing method according to an embodiment of the present invention;
FIG. 7 is a schematic structural diagram of a communication processing apparatus according to an embodiment of the present invention;
FIG. 8 is a schematic structural diagram of a terminal according to an embodiment of the present invention;
FIG. 9 is a schematic structural diagram of an application server according to an embodiment of the present invention; and
FIG. 10 is a schematic structural diagram of another terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

When ordinal numbers such as "first" and "second" are mentioned in the embodiments of the present invention, it should be understood that they merely play a role of distinction unless they really express the meaning of a sequence according to the context.

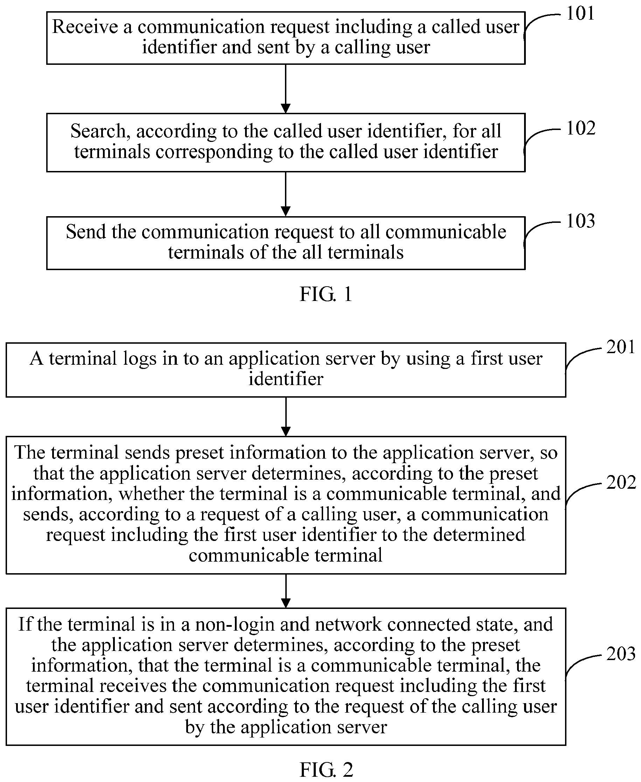

FIG. 1 is a flow chart of a communication processing method according to an embodiment of the present invention. As shown in FIG. 1, the method includes:
Step 101: Receive a communication request including a called user identifier and sent by a calling user.

An application scenario of the embodiment of the present invention may be that: A calling user is to communicate, through an application, with a called user using the same application; after logging in to an application server corresponding to the application, the calling user may initiate a communication request to the called user. Either the calling user or the called user may log in to the application server through a terminal.

In step 101, the application server receives the communication request sent through the Internet (Internet) by the calling user, where the communication request includes the identifier of the called user. The communication request may, for example, be an audio or a video call request, and may also be an instant messenger (instant messenger, IM for short) message.

Step 102: Search, according to the called user identifier, for all terminals corresponding to the called user identifier.

The all terminals include a terminal which has logged in by using the called user identifier and does not log in currently.

The application server can maintain information of each user, for example, can maintain information of a user about performing login through a terminal. A certain user may log in to the application server through a plurality of terminals, and the application server may learn one or more terminals through which the user currently logs in, and may also learn one or more terminals through which the user previously logged in.

After receiving the called user identifier, the application server can find, through searching, all terminals which have logged in by using the called user identifier, which include a terminal which logs in currently and a terminal which does not log in currently.

Step 103: Send the communication request to all communicable terminals of the all terminals.

The all terminals found, through searching, by the application server may be communicable terminals, and a part of terminals may also be selected from the all terminals according to another preset condition as communicable terminals. That is to say, a communicable terminal in the embodiment of the present invention is not limited to only a terminal which is currently in a login state, and a terminal which previously logged in to the application server and currently does not log in to the application server may also serve as a communicable terminal.

A communicable terminal is a terminal capable of receiving a communication request, and the application server may send the communication request to all communicable terminals. The communicable terminal refers to that: When a terminal is not set with preset information, all terminals corresponding to the called user identifier may be communicable terminals; or, when a terminal is set with preset information, except a terminal which is determined according to the preset information to be currently incapable of receiving the communication request, all terminals corresponding to the called user identifier are communicable terminals; these terminals may currently be in a login state, a non-login and network connected state and/or a network disconnected state. All communicable terminals may include a terminal which does not log in currently, so in the embodiment of the present invention, a communication request may be initiated to the terminal which does not log in currently, and therefore, it can be implemented that the calling user can initiate a communication request to a called user which does not log in currently.

When the number of all communicable terminals is plural, the application server can send a communication request to all communicable terminals in a simultaneous ringing or an order ringing manner, or the application server can send a communication request to only a communicable terminal according to setting of the called user.

It should be noted that, for a non-login and network connected terminal of all communicable terminals, the application server can send a communication request to these terminals through a push (push) server; for a terminal in the network disconnected state of all communicable terminals, a communication request sent by the application server is temporarily stored in the push server, and the push server can send the communication request to the terminal after the terminal restores the network connected state.

In the embodiment of the present invention, after receiving a communication request sent by a calling user, an application server can find, through searching, all terminals corresponding to a called user, which include a terminal which corresponds to the called user and does not log in currently, and send the communication request to a communicable terminal of the all terminals. Therefore, a terminal which logged in previously but does not log in currently is also enabled to receive the communication request sent by the calling user, so as to optimize user experience.

FIG. 2 is a flow chart of another communication processing method according to an embodiment of the present invention. As shown in FIG. 2, the method includes:
Step 201: A terminal logs in to an application server by using a first user identifier.

A terminal in each embodiment of the present invention may be, for example, a terminal device such as a mobile phone, a tablet computer, a notebook computer, a UMPC (ultra-mobile personal computer, ultra-mobile personal computer), a netbook or a PDA (personal digital assistant, personal digital assistant).

When a certain application which can be used for communication is installed in a terminal, the terminal can log in to an application server corresponding to the application by using a user identifier. After the terminal logs in to the application server, the application server can maintain login information of the terminal, which may, for example, include: an identifier of the terminal, an identifier of the application, and a login state of the terminal.

Step 202: The terminal sends preset information to the application server, so that the application server determines, according to the preset information, whether the terminal is a communicable terminal, and sends, according to a request of a calling user, a communication request including the first user identifier to the determined communicable terminal.

After logging in to the application server by using the first user identifier, the terminal can send preset information to the application server, and the preset information is used for indicating whether the terminal is a communicable terminal. After sending the preset information to the application server, the terminal may always be in the login state, and may also log out and be in a non-login state. The preset information may, for example, indicate that when being in the non-login state, the terminal is still a communicable terminal, so that when being in the non-login state, the terminal can still receive the communication request sent according to the request of the calling user by the application server.

After the calling user initiates the communication request to a called user, the application server searches for a corresponding terminal according to the first user identifier in the communication request, and determines, according to the preset information, whether the terminal is currently a communicable terminal; if the terminal is a communicable terminal, the application server sends the communication request to the terminal, where the first user identifier is a called user identifier.

Further, in another implementation manner, the method may further include:
Step 203: If the terminal is in a non-login and network connected state, and the application server determines, according to the preset information, that the terminal is a communicable terminal, the terminal receives the communication request including the first user identifier and sent according to the request of the calling user by the application server.

After the terminal executes step 201 and step 202, a first user can log out, so that the terminal is in the non-login and network connected state. When the terminal is in the non-login and network connected state, the application server can find, through searching, the terminal when the first user is called; if the terminal does not send configuration information to the application server, the application server considers the terminal as a communicable terminal by default, and can directly call the terminal; if the terminal sends the configuration information to the application server, the application server can determine, according to the configuration information, whether the terminal is a communicable terminal, and can call the terminal if the terminal is a communicable terminal.

A communicable terminal serving as a called terminal can receive the communication request sent by the application server, where the communicable terminal serving as a called terminal may be a terminal which logs in by using the first user identifier and is currently still in the login state or in the non-login and network connected state. When the called communicable terminal is in the non-login and network connected state, the communicable terminal receives the communication request sent through the push server by the application server.

In the embodiment of the present invention, after logging in to an application server, a terminal can send preset information to the application server, so that the application server can determine, according to the preset information, whether the terminal is a communicable terminal, and send, according to a request of a calling user, a communication request including a first user identifier to the determined communicable terminal. Therefore, when being in a non-login state, the terminal is still enabled to receive the communication request sent according to the request of the calling user by the application server, so as to optimize user experience.

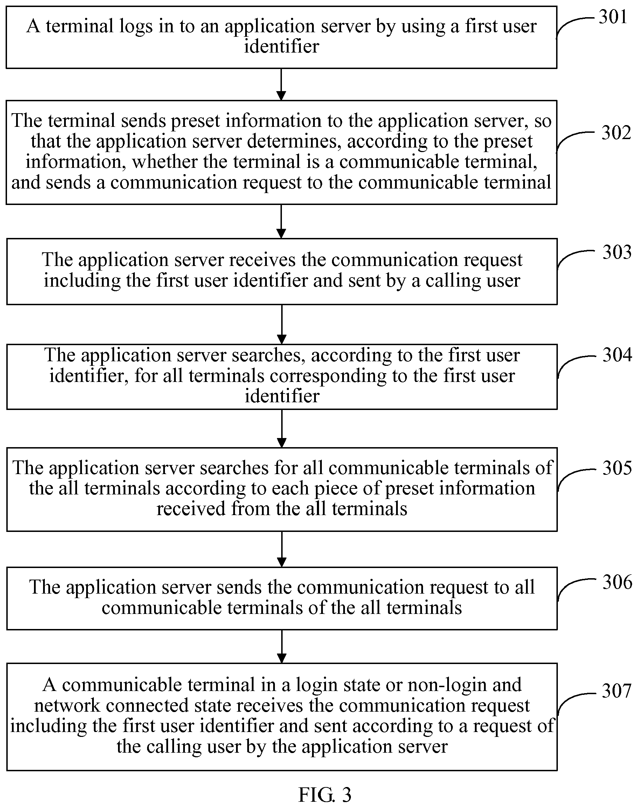

FIG. 3 is a flow chart of another communication processing method according to an embodiment of the present invention. On the basis of the embodiments shown in FIG. 1 and FIG. 2, as shown in FIG. 3, the method includes:
Step 301: A terminal logs in to an application server by using a first user identifier.

The step is the same as step 201 in the embodiment shown in FIG. 2. Here, the first user identifier and a called user identifier in a subsequent step are the same user identifier.

Step 302: The terminal sends preset information to the application server, so that the application server determines, according to the preset information, whether the terminal is a communicable terminal, and sends a communication request to the communicable terminal.

After logging in to the application server, the terminal can set its own preset information, and send the preset information to the application server, so that the application server can selectively send the communication request to the terminal according to the information set by the terminal itself. For example, the terminal may set that the terminal is a communicable terminal only when the terminal is in a certain state, and only in this case, the terminal is allowed to receive a communication request of a calling user, so only when the application server learns that a certain terminal is a communicable terminal, the application server sends the communication request to the terminal, otherwise the application server does not send the communication request to the terminal. In each embodiment of the present invention, the communicable terminal is a terminal to which the application server can send a communication request.

The preset information may include, but is not limited to: first instruction information, second instruction information, third instruction information or fourth instruction information.

The first instruction information is used for indicating whether a terminal in a login state or non-login state is a communicable terminal. A user of the terminal can randomly set the first instruction information according to a demand. For example, the first instruction information may be 00, 01, 10 or 11; the terminal and the application server agree on in advance that, 00 and 01 respectively indicate that the terminal in the login state is a communicable terminal and the terminal in the non-login state is a communicable terminal, namely, 00 and 01 respectively indicate that the terminal in the login state receives the communication request sent by the application server and the terminal in the non-login state receives the communication request sent by the application server; 10 and 11 respectively indicate that the terminal in the login state is an incommunicable terminal and the terminal in the non-login state is an incommunicable terminal, namely, 10 and 11 respectively indicate that the terminal in the login state does not receive the communication request sent by the application server and the terminal in the non-login state does not receive the communication request sent by the application server. The terminal indicates a setting state by sending different first instruction information to the application server. The non-login state may include a non-login and network connected state and a network disconnected state.

The second instruction information is used for indicating whether a terminal in a network disconnected state or network connected state is a communicable terminal. By setting the second instruction information, a communication capability of the terminal in different network connection states can be set.

The third instruction information is used for indicating that if location information of a terminal is within a preset range, the terminal is a communicable terminal. Through the third instruction information, it may be implemented that the terminal receives the communication request only in a certain location range, but does not receive the communication request beyond the location range. For example, by setting the third instruction information, it may be implemented that the terminal in a roaming state does not receive the communication request.

The fourth instruction information is used for indicating that if a network environment of a terminal conforms to a preset condition, the terminal is a communicable terminal. Through the fourth instruction information, it may be implemented that the terminal receives the communication request only in a certain network environment, but does not receive the communication request in other network environments. For example, by setting the fourth instruction information, it may be implemented that the terminal receives the communication request only in a Wi-Fi (wireless fidelity) connection state, otherwise the terminal does not receive the communication request.

Step 303: The application server receives the communication request including the first user identifier and sent by the calling user. The first user identifier is the called user identifier.

The step is the same as step 101 in the embodiment shown in FIG. 1.

Step 304: The application server searches, according to the first user identifier, for all terminals corresponding to the first user identifier.

The all terminals include a terminal which has logged in by using the first user identifier and does not log in currently.

Step 305: The application server searches for all communicable terminals of the all terminals according to each piece of preset information received from the all terminals.

Each terminal of the all terminals corresponds to one piece of preset information.

The application server can find, through searching according to the preset information received in step 302, a communicable terminal from the all terminals corresponding to the first user identifier. For example, the application server may determine, according to first instruction information, second instruction information, third instruction information or fourth instruction information of a terminal A, whether the terminal A in a current state is a communicable terminal, and the current state includes whether login is performed, whether a network is disconnected, location information, a network environment, and so on. The application server can obtain, from a push server, information about whether the terminal is disconnected from a network.

Step 306: The application server sends the communication request to all communicable terminals of the all terminals. When the number of communicable terminals is plural, the application server may send a communication request to one of a plurality of communicable terminals according to setting of the user, or may also send a communication request to a plurality of communicable terminals according to setting of the user in a simultaneous ringing or an order ringing manner.

When the simultaneous ringing manner is adopted, the application server sends a communication request to all communicable terminals simultaneously.

When the order ringing manner is adopted, the application server can send the communication request sequentially to each terminal of the all communicable terminals according to a preset sequence and a preset time interval until the communication request is responded. The preset sequence may be performed according to a priority sequence preset by the user.

For example, if the user presets a priority of a terminal M to be the highest, no matter whether the terminal M is currently disconnected from the network or whether the terminal M logs in, a communication request is first sent to the terminal M. Alternatively, the user may also set a priority of a terminal in the login state to be the highest, a priority of a terminal in the non-login and network connected state to be the second highest, and a priority of a terminal in the network disconnected state to be the lowest, and for a plurality of terminals in the login state, a plurality of terminals in the non-login and network connected state, and a plurality of terminals in the network disconnected state, a priority is set respectively, and then the application server can send the communication request sequentially to each terminal of login terminals of the all communicable terminals according to a preset sequence and a preset time interval until the communication request is responded; if the communication request received by each terminal of the login terminals of the all communicable terminals is not responded, the communication request is sent to each terminal of non-login and network connected terminals of the all communicable terminals sequentially according to a preset sequence and a preset time interval; if the communication request received by each terminal of the non-login and network connected terminals of the all communicable terminals is not responded, and if the all communicable terminals include a terminal in the network disconnected state, the communication request is sent sequentially to all terminals in the network disconnected state of the all communicable terminals according to a preset sequence and a preset time interval until the communication request is responded. It should be noted that, in the order ringing manner, for a plurality of terminals in the network disconnected state, the application server may send a communication request to the plurality of terminals sequentially, or may also send a communication request to the plurality of terminals simultaneously.

For a terminal in the login state of the communicable terminals, the application server can directly send a communication request to the terminal; when the communicable terminals includes a terminal in the non-login and network connected state, for the terminal in the non-login and network connected state, the application server sends a communication request to the terminal through the push server, which may specifically be that: The application server sends a communication request to the push server, and the push server pushes the communication request to the terminal; when the communicable terminals includes a terminal in the network disconnected state, for the terminal in the network disconnected state, the application server sends a communication request to the terminal through the push server, which may specifically be that: The application server sends a communication request to the push server, the push server saves the communication request, and pushes the communication request to the terminal after the push server detects that the terminal is connected to the network.

It should be noted that, in another implementation manner, the foregoing step 302 and step 305 may not be included. That is to say, the terminal may not set the preset information, and in this case, the application server can consider all terminals corresponding to the first user identifier as communicable terminals by default. That is, the all terminals corresponding to the first user identifier are the all communicable terminals.

Step 307: A communicable terminal in the login state or non-login and network connected state receives the communication request including the first user identifier and sent according to a request of the calling user by the application server, where the terminal is a called terminal.

After the application server sends a communication request, a communicable called terminal in the login state receives the communication request, and a communicable called terminal in the non-login and network connected state receives the communication request after being pushed up by the push server. A communicable called terminal in the network disconnected state can receive the communication request sent by the push server after being connected to the network again.

In the embodiment of the present invention, after receiving a communication request sent by a calling user, an application server can find, through searching, all communicable terminals corresponding to a called user, which include a terminal which corresponds to the called user and does not log in currently, and send the communication request to the all communicable terminals. Therefore, a terminal which logged in previously but does not log in currently is also enabled to receive the communication request sent by the calling user, so as to optimize user experience.

The communication request in each embodiment of the present invention may be an audio or a video call request, and may also be an IM message, and the embodiments of the present invention are specifically described in the following according to situations.

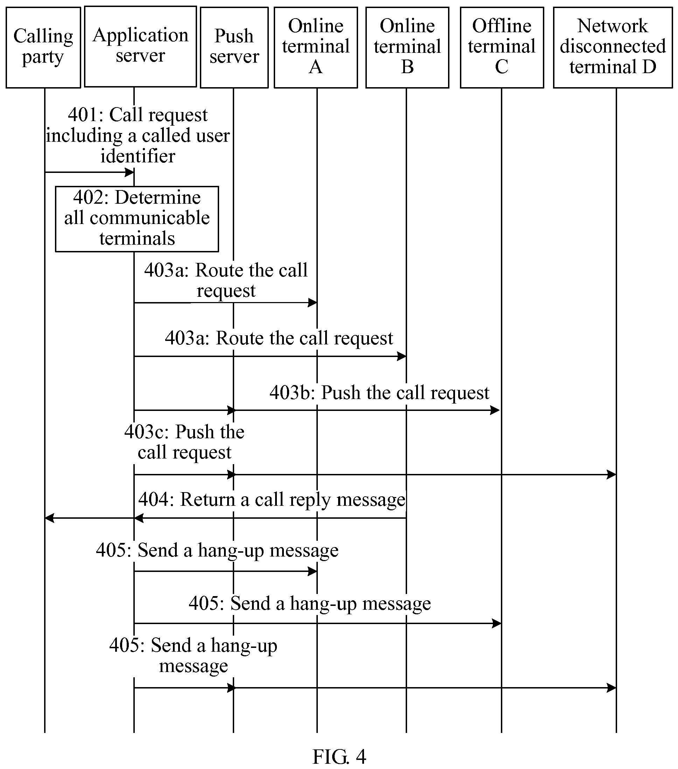

An application scenario of an embodiment shown in FIG. 4 is that: A communication request is an audio or a video call request, and a call is made in a simultaneous ringing manner. FIG. 4 is a signaling interaction diagram of a communication processing method according to an embodiment of the present invention. As shown in FIG. 4, the method includes:
Step 401: A calling user sends a call request including a called user identifier to an application server.

An audio or a video call in the embodiment of the present invention may be implemented through various protocols, the following takes the extensible messaging and presence protocol (the extensible messaging and presence protocol, XMPP for short) as an example for description, and the audio or the video call may specifically be implemented through the Jingle protocol. The Jingle protocol is an extension protocol based on the XMPP, and is mainly used for an audio call and a video phone.

Jingle signaling in the prior art only includes a full user ID (FullJID), and a format of the full user ID is userId@server name/resource identifier, such as: 12345@huawei.com/001. The full user ID can position a unique session of a login user.

To implement the method provided by the embodiment of the present invention, the full user ID in the Jingle signaling is modified into a bare user ID (BareJID). A format of the bare user ID is userId@server name, such as: 54321@huawei.com. The bare user ID is only used for identifying a user, and cannot position the unique session of the login user.

In the embodiment of the present invention, a communication request sent by the calling user may include a bare user ID of a called user.

Step 402: The application server searches, according to the called user identifier, for all terminals to which the called user has logged in and states of the terminals, and determines all communicable terminals.

The application server is, for example, an XMPP server.

The application server maintains information of all terminals which have logged in, which includes a user identifier corresponding to a terminal, information about whether the terminal is currently logging in, and information about whether the terminal is a communicable terminal; according to the maintained information, the application server can determine all communicable terminals, and for a specific procedure, reference can be made to the description in step 304 of the embodiment shown in FIG. 3.

Step 403: The application server routes the call request to all communicable terminals simultaneously. Specifically, the step includes: step 403a, step 403b and step 403c.
Step 403a: The application server routes the call request to all communicable terminals in a login state simultaneously, and in this case, the all communicable terminals in the login state begin ringing. In this embodiment, an online terminal A and an online terminal B are taken as an example to represent all communicable terminals in the login state.
Step 403b: The application server pushes the call request to all communicable terminals in a non-login and network connected state through a push server, and in this case, the all terminals in the non-login and network connected state are pushed up to log in and begin ringing. In this embodiment, an offline terminal C is taken as an example to represent all communicable terminals in the non-login and network connected state.
Step 403c: The application server pushes the call request to all communicable terminals in a network disconnected state through the push server, and in this case, the push server temporarily stores the call request, and sends missed incoming call reminder information to the terminal after the terminal restores a network connection. In this embodiment, a network disconnected terminal D is taken as an example to represent all communicable terminals in the network disconnected state.

It should be noted that, this embodiment does not limit a sequence of the foregoing step 403a, step 403b and step 403c, and step 403a, step 403b and step 403c may occur simultaneously. Moreover, according to preset information set by the user, if the communicable terminals do not include a terminal in the network disconnected state, step 403 may not include 403c, and if the communicable terminals do not include a terminal in the non-login and network connected state, step 403 may not include 403b.

Step 404: The called user selects to answer the call on the online terminal B (or another terminal in the network connected state), and the online terminal B returns a call reply message to the application server.

In this step, when the called user answers the call on the online terminal A or the offline terminal C, a corresponding operation is executed.

Step 405: The application server sends a hang-up message to the online terminal A, the offline terminal C and the network disconnected terminal D, and in this case, the online terminal A and the offline terminal C stop ringing; the push server obtains a current state of the network disconnected terminal D; if the network disconnected terminal D currently does not restore a network connection, the push server cancels the temporarily stored call request, and therefore, after the network disconnected terminal D restores the network connection, missed incoming call reminder information is not sent anymore to the network disconnected terminal D; if the network disconnected terminal D currently has restored the network connection, and the push server has sent the missed incoming call reminder information to the network disconnected terminal D, the push server sends, to the network disconnected terminal D, a reminder message that the call has been answered at another terminal.

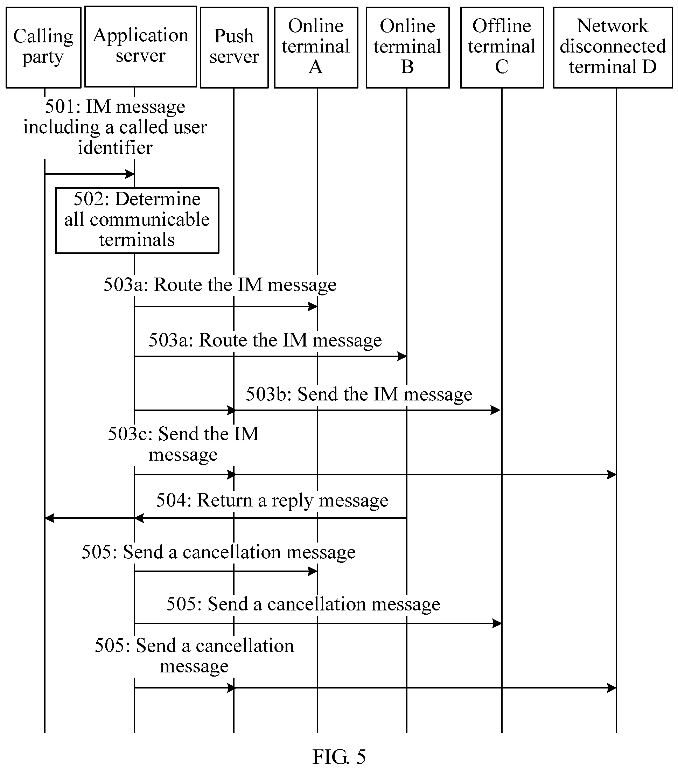

An application scenario of an embodiment shown in FIG. 5 is that: A communication request is an IM message, and a call is made in a simultaneous ringing manner. FIG. 5 is a signaling interaction diagram of another communication processing method according to an embodiment of the present invention. As shown in FIG. 5, the method includes:
Step 501: A calling user sends an IM message including a called user identifier to an application server. The called user identifier is, for example, a bare user ID (BareJID).
Step 502: The application server searches, according to the called user identifier, for all terminals to which a called user has logged in and states of the terminals, and determines all communicable terminals.

For details, reference is made to the description in step 402 in the embodiment shown in FIG. 4.

Step 503: The application server routes the IM message to all communicable terminals simultaneously. Specifically, the step includes:
Step 503a: The application server routes the IM message to all communicable terminals in a login state simultaneously, and in this case, the all communicable terminals in the login state receive the IM message and begin ringing. In this embodiment, an online terminal A and an online terminal B are taken as an example to represent all communicable terminals in the login state.
Step 503b: The application server sends the IM message to all communicable terminals in a non-login and network connected state through a push server, and in this case, the all terminals in the non-login and network connected state are pushed up to log in, receive the IM message and begin ringing. In this embodiment, an offline terminal C is taken as an example to represent all communicable terminals in the non-login and network connected state.
Step 503c: The application server sends the IM message to all communicable terminals in a network disconnected state through the push server, and in this case, the push server temporarily stores the IM message, and sends the IM message to the terminal after the terminal restores a network connection. In this embodiment, a network disconnected terminal D is taken as an example to represent all communicable terminals in the network disconnected state.

It should be noted that, this embodiment does not limit a sequence of the foregoing step 503a, step 503b and step 503c, and step 503a, step 503b and step 503c may occur simultaneously. Moreover, according to preset information set by the user, if the communicable terminals do not include a terminal in the network disconnected state, step 503 may not include 503c, and if the communicable terminals do not include a terminal in the non-login and network connected state, step 503 may not include 503b.

Step 504: After the called user checks the IM message on the online terminal B (or another terminal in the network connected state), the online terminal B returns a reply message to the application server.

Step 505: The application server sends a cancellation message to the online terminal A, the offline terminal C and the network disconnected terminal D, and in this case, the online terminal A and the offline terminal C stop ringing and flickering.

After the called user checks the IM message on a terminal, the application server sends a cancellation message to other terminals. Step 505 is optional, and the application server may not send the cancellation message to the other terminals.

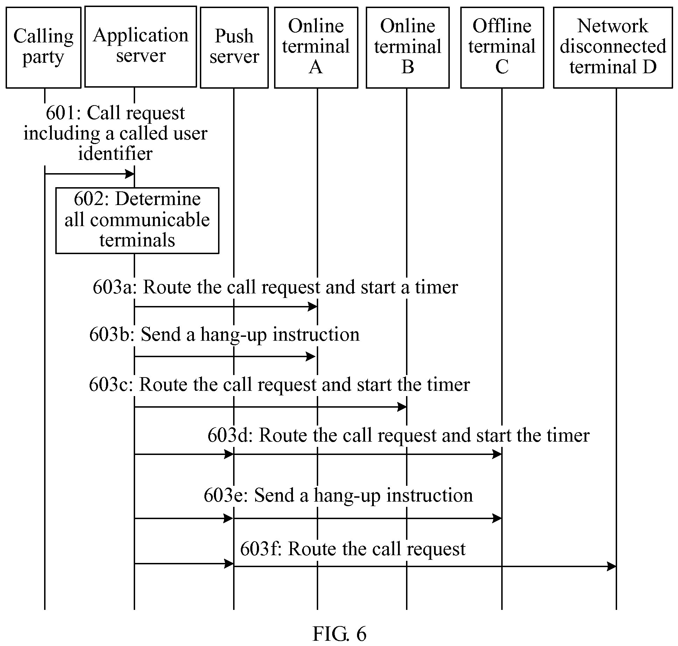

An application scenario of an embodiment shown in FIG. 6 is that: A communication request is an audio or a video call request, and a call is made in an order ringing manner. FIG. 6 is a signaling interaction diagram of another communication processing method according to an embodiment of the present invention. As shown in FIG. 6, the method includes:
Step 601: A calling user sends a call request including a called user identifier to an application server.
Step 602: The application server searches, according to the called user identifier, for all terminals to which a called user has logged in and states of the terminals, and determines all communicable terminals.

For details of step 601 and step 602, reference is made to the description in step 401 and step 402 in the embodiment shown in FIG. 4.

Step 603: The application server routes the call request to all communicable terminals sequentially. Specifically, the step includes: step 603a, step 603b and step 603c.
Step 603a: According to a preset priority sequence, the application server routes the call request to a communicable terminal in a login state (such as an online terminal A), and starts a timer simultaneously, and in this case, the online terminal A begins ringing.
Step 603b: If the called user does not answer at the terminal after the timer expires, the application server sends a hang-up instruction to the terminal, and in this case, the terminal stops ringing, where a time length of the timer may be preconfigured.
Step 603c: The application server routes the call request to a next terminal in the login state, and starts the timer, namely, repetitively executes step 603a and step 603b, until the called user selects to answer at a certain terminal, or until order ringing of all communicable terminals in the login state is completed; if the called user selects to answer at a certain terminal, the method ends, and if order ringing of all communicable terminals in the login state is completed, and the called user does not answer, step 603d is executed.
Step 603d: According to a preset priority sequence, the application server routes the call request to a communicable terminal in the non-login and network connected state (such as a terminal C) through a push server, and in this case, the terminal C is pushed up to log in and rings; and meanwhile, the application server starts the timer.

The application server can learn, from the push server, whether each communicable terminal in the non-login state is currently in the network disconnected state.

Step 603e: If the called user does not answer at the terminal C after the timer expires, the application server sends a hang-up instruction to the terminal C, and in this case, the terminal C stops ringing.

Step 603d and step 603e are repetitively executed, and the application server routes the call request to a next terminal in the non-login and network connected state, and starts the timer until the called user selects to answer at a certain terminal, or until order ringing of all communicable terminals in the non-login and network connected state is completed; if the called user selects to answer at a certain terminal, the method ends, and if order ringing of all communicable terminals in the non-login and network connected state is completed, and the called user does not answer, step 603f is executed.

603f: The application server routes the call request to all communicable terminals in the network disconnected state (such as a network disconnected terminal D) through the push server simultaneously, and in this case, the push server temporarily stores the call request, and sends missed incoming call reminder information to the terminal D after the terminal D restores a network connection.

It should be noted that, in this embodiment, all communicable terminals can be found, through searching, in step 602, and then step 603 is executed; or after one or more communicable terminals are found, through searching, in step 602, step 603 of sequentially routing the call request to the communicable terminals found through searching is executed, then step 602 and step 603 are repetitively executed, and the call request is routed to other communicable terminals, until the call request is responded or the call request is routed to all communicable terminals.

A solution of this embodiment is likewise applicable to a scenario that a communication request is an IM message.

In each embodiment of the present invention, after receiving a communication request sent by a calling user, an application server can find, through searching, all communicable terminals corresponding to a called user, which include a terminal which corresponds to the called user and does not log in currently, and send the communication request to the all communicable terminals. Therefore, a terminal which logged in previously but does not log in currently is also enabled to receive the communication request sent by the calling user, so as to optimize user experience.

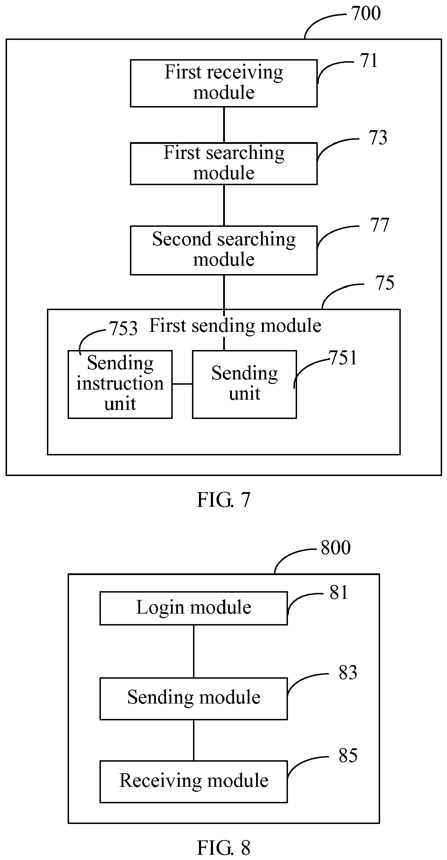

FIG. 7 is a schematic structural diagram of a communication processing apparatus according to an embodiment of the present invention. As shown in FIG. 7, the communication processing apparatus 700 includes: a first receiving module 71, a first searching module 73 and a first sending module 75.

The first receiving module 71 is configured to receive a communication request including a called user identifier and sent by a calling user.

The first searching module 73 is configured to search, according to the called user identifier received by the first receiving module 71, for all terminals corresponding to the called user identifier. The all terminals include a terminal which has logged in by using the called user identifier and does not log in currently.

The first sending module 75 is configured to send the communication request to all communicable terminals of the all terminals found, through searching, by the first searching module 73.

In another specific implementation manner, the all communicable terminals are the all terminals.

In another specific implementation manner, the communication processing apparatus 700 may further include: a second searching module 77.

The second searching module 77 is configured to, before the first sending module 75 sends the communication request to all communicable terminals of the all communication terminals, search for all communicable terminals of the all terminals according to each piece of preset information received from the all terminals, where each terminal of the all terminals corresponds to one piece of preset information.

Further, the first sending module 75 includes: a sending unit 751 and a sending instruction unit 753.

The sending unit 751 is configured to send the communication request to the all communicable terminals.

The sending instruction unit 753 is configured to instruct the sending unit 751 to send the communication request to the all communicable terminals simultaneously; or configured to instruct the sending unit 751 to send the communication request sequentially to each terminal of the all communicable terminals according to a preset sequence and a preset time interval until the communication request is responded.

The communication processing apparatus provided by this embodiment may be the application server in each of the foregoing method embodiments. For a work flow and a work principle of the communication processing apparatus, reference is made to the description in each of the foregoing method embodiments, and details are not repeatedly described here.

In the embodiment of the present invention, after a first receiving module receives a communication request sent by a calling user, a first searching module can find, through searching, all communicable terminals corresponding to a called user, which include a terminal which corresponds to the called user and does not log in currently, and then a first sending module sends the communication request to the all communicable terminals. Therefore, a terminal which logged in previously but does not log in currently is also enabled to receive the communication request sent by the calling user, so as to optimize user experience.

FIG. 8 is a schematic structural diagram of a terminal according to an embodiment of the present invention. As shown in FIG. 8, the terminal 800 includes: a login module 81 and a sending module 83.

The login module 81 is configured to log in to an application server by using a first user identifier.

The sending module 83 is configured to send preset information to the application server after the login module 81 logs in to the application server by using the first user identifier, so that the application server determines, according to the preset information, whether the terminal is a communicable terminal, and send, according to a request of a calling user, a communication request including the first user identifier to the determined communicable terminal, where the terminal is a called terminal.

Further, the terminal 800 may further include: a receiving module 85.

The receiving module 85 is configured to, after the sending module 83 sends the preset information to the application server, if the terminal is in a non-login and network connected state, and the application server determines, according to the preset information, that the terminal is a communicable terminal, receive the communication request including the first user identifier and sent according to the request of the calling user by the application server.

Further, the preset information includes:
first instruction information used for indicating whether a terminal in a login state or non-login state is a communicable terminal; or, second instruction information used for indicating that if a terminal is in a network connected state, the terminal is a communicable terminal; or, third instruction information used for indicating that if location information of a terminal is within a preset range, the terminal is a communicable terminal; or, fourth instruction information used for indicating that if a network environment of a terminal conforms to a preset condition, the terminal is a communicable terminal.

The terminal provided by this embodiment is configured to implement the method in each of the foregoing method embodiments. For a work flow and a work principle of the terminal, reference is made to the description in each of the foregoing method embodiments, and details are not repeatedly described here.

In the embodiment of the present invention, after logging in to an application server, a terminal can send preset information to the application server, so that the application server can determine, according to the preset information, whether the terminal is a communicable terminal, and send, according to a request of a calling user, a communication request including a first user identifier to the determined communicable terminal. Therefore, when being in a non-login state, the terminal is still enabled to receive the communication request sent according to the request of the calling user by the application server, so as to optimize user experience.

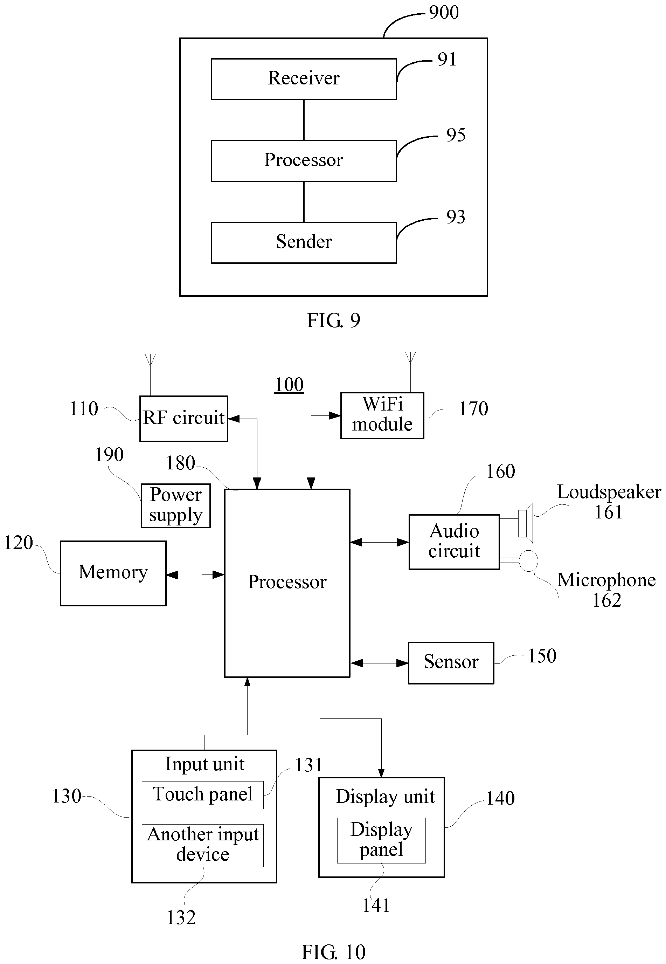

FIG. 9 is a schematic structural diagram of an application server according to an embodiment of the present invention. As shown in FIG. 9, an application server 900 includes:
a receiver 91, configured to receive a signal;
a sender 93, configured to send a signal; and
a processor 95, configured to receive, through the receiver 91, a communication request including a called user identifier and sent by a calling user, search, according to the called user identifier, for all terminals corresponding to the called user identifier, and send the communication request to all communicable terminals of the all terminals through the sender 93, where the all terminals include a terminal which has logged in by using the called user identifier and does not log in currently.

In a specific implementation manner, the all communicable terminals are the all terminals.

In another specific implementation manner, before the processor 95 sends the communication request to all communicable terminals of the all communication terminals through the sender 93, the processor 95 further searches for all communicable terminals of the all terminals according to each piece of preset information received from the all terminals, where each terminal of the all terminals corresponds to one piece of the preset information.

Further, the preset information includes:
first instruction information used for indicating whether a terminal in a login state or non-login state is a communicable terminal; or, second instruction information used for indicating whether a terminal in a network disconnected state or network connected state is a communicable terminal; or, third instruction information used for indicating that if location information of a terminal is within a preset range, the terminal is a communicable terminal; or, fourth instruction information used for indicating that if a network environment of a terminal conforms to a preset condition, the terminal is a communicable terminal.

Further, that the processor 95 sends the communication request to all communicable terminals of the all communication terminals through the sender 93 may specifically include:
sending, by the processor 95, the communication request to the all communicable terminals through the sender 93 simultaneously; or
sending, by the processor 95, the communication request sequentially to each terminal of the all communicable terminals through the sender 93 according to a preset sequence and a preset time interval until the communication request is responded.

The application server provided by this embodiment is configured to implement each of the foregoing method embodiments. For a work flow and a work principle of the application server, reference is made to the description in each of the foregoing method embodiments, and details are not repeatedly described here.

In the embodiment of the present invention, after receiving a communication request sent by a calling user, an application server can find, through searching, all communicable terminals corresponding to a called user, which include a terminal which corresponds to the called user and does not log in currently, and send the communication request to the all communicable terminals. Therefore, a terminal which logged in previously but does not log in currently is also enabled to receive the communication request sent by the calling user, so as to optimize user experience.

FIG. 10 is a schematic structural diagram of another terminal according to an embodiment of the present invention. The terminal provided by the embodiment of the present invention may be configured to implement the method implemented by each of the embodiments of the present invention shown in the foregoing FIG. 1 to FIG. 6. For convenience of description, only a part relevant to the embodiments of the present invention is shown, and for a part whose specific technical details are not disclosed, reference is made to each of the embodiments of the present invention shown in FIG. 1 to FIG. 6.

The terminal may be a terminal device such as a mobile phone, a tablet computer, a notebook computer, a UMPC, a netbook or a PDA, in the embodiment of the present invention, that the terminal is a mobile phone is taken as an example for description, and FIG. 10 shows a schematic structural diagram of a part of a mobile phone 100 relevant to each of the embodiments of the present invention.

As shown in FIG. 10, the mobile phone 100 includes components such as an RF (radio frequency, radio frequency) circuit 110, a memory 120, an input unit 130, a display unit 140, a sensor 150, an audio circuit 160, a WiFi (wireless fidelity, wireless fidelity) module 170, a processor 180, and a power supply 190. A person skilled in the art can understand that, a structure of the mobile phone shown in FIG. 10 does not limit the mobile phone, and may include more or less components than those shown in the figure, or combine some components, or be in a different component arrangement.

The components of the mobile phone 100 are specifically introduced with reference to FIG. 10 in the following. The RF circuit 110 may be configured to receive and send a signal during an information receiving/sending procedure or a call procedure, and particularly, receive downlink information of a base station and then send the downlink information to the processor 180 for processing; additionally, send the base station uplink data. Generally, the RF circuit includes, but is not limited to, an antenna, at least one amplifier, a transceiver, a coupler, an LNA (low noise amplifier, low noise amplifier), and a duplexer. Moreover, the RF circuit 110 may further communicate with a network and another device through wireless communication. The wireless communication may use any communication standard or protocol, which includes, but is not limited to, a GSM (global system of mobile communication, global system of mobile communication), GPRS (general packet radio service, general packet radio service), CDMA (code division multiple access, code division multiple access), WCDMA (wideband code division multiple access, wideband code division multiple access), LTE (long term evolution, long term evolution), an email, and an SMS (short messaging service, short messaging service).

The memory 120 may be configured to store a software program and module. The processor 180 executes various function applications and data processing of the mobile phone 100 by running the software program and module stored in the memory 120. The memory 120 may mainly include a program storage area and a data storage area, where the program storage area may store an operating system, at least one function-required application (such as a voice play function, and an image play function), and the like; the data storage area may store data (such as audio data, and a phone book) created according to use of the mobile phone 100. Moreover, the memory 120 may include a high-speed random access memory, and may further include a non-volatile memory, such as at least one magnetic disk memory device, a flash memory device, or another volatile solid-state memory device.

The input unit 130 may be configured to receive input digit or character information, and generate a key signal input relevant to user setting and function control of the mobile phone 100. Specifically, the input unit 130 may include a touch panel 131 and another input device 132. The another input device 132 may include, but not limited to, one or more of a physical keyboard, a function key (such as a volume control button and a switch button), a trackball, a mouse, and an operating rod.

The display unit 140 may be configured to display information input by a user or information provided for a user and various menus of the mobile phone 100. The display unit 140 may include a display panel 141, and optionally, the display panel 141 may be configured in a form such as an LCD (liquid crystal display, liquid crystal display), and an OLED (organic light-emitting diode, organic light-emitting diode). Further, the touch panel 131 may cover the display panel 141; and when detecting a touch operation on or near the touch panel 131, the touch panel 131 transmits the touch operation to the processor 180 for determining a type of a touch event, and then the processor 180 provides a corresponding visual output on the display panel 141 according to the type of the touch event. In FIG. 10, although the touch panel 131 and the display panel 141 implement input and output functions of the mobile phone 100 as two independent components, in some embodiments, the touch panel 131 and the display panel 141 may be integrated to implement the input and output functions of the mobile phone 100.

The mobile phone 100 may further include at least one sensor 150, such as an optical sensor, a motion sensor and another sensor. Specifically, the optical sensor may include an ambient light sensor and a proximity sensor, where the ambient light sensor may adjust brightness of the display panel 141 according to illumination of ambient light, and the proximity sensor may close the display panel 141 and/or backlight when the mobile phone 100 is moved to an ear. Other sensors, such as a gyroscope, a barometer, a hygrometer, a thermometer, and an infrared sensor, may be further configured in the mobile phone 100, and are not described in detail here.

The audio circuit 160, a loudspeaker 161, and a microphone 162 may provide an audio interface between the user and the mobile phone 100. The audio circuit 160 may transmit an electric signal converted from received audio data to the loudspeaker 161, and the loudspeaker 161 converts the electric signal into a voice signal and then outputs the sound signal; on the other hand, the microphone 162 converts a collected voice signal into an electric signal, the audio circuit 160 receives the electric signal, converts the electric signal into audio data, and then outputs the audio data to the RF circuit 110, so as to send the audio data to, for example, another mobile phone, or outputs the audio data to the memory 120 for further processing.

WiFi belongs to a short-distance wireless transmission technology, and the mobile phone 100 may help the user receive and send an email, browse a webpage, visit a streaming medium, and the like through the WiFi module 170, which provides wireless broadband Internet access for the user. FIG. 10 shows the WiFi module 170; however, it should be understood that, the WiFi module 170 is not a necessary component of the mobile phone 100, and may completely be omitted according to a requirement without changing the essential scope of the present invention.

The processor 180 is a control center of the mobile phone 100, connects to various parts of the mobile phone by utilizing various interfaces and lines, and executes various functions of the mobile phone 100 and processes data by running or executing a software program and/or module stored in the memory 120 and invoking data stored in the memory 120, thereby performing overall monitoring on the mobile phone. Optionally, the processor 180 may include one or more processing units; preferably, the processor 180 may integrate an application processor and a modem processor, where the application processor mainly processes an operating system, a user interface, applications, and the like, and the modem processor mainly processes wireless communication. It should be understood that, the foregoing modem processor may also not be integrated into the processor 180.

The mobile phone 100 further includes the power supply 190 (such as a battery) for supplying power to each component, and preferably, the power supply may logically connect to the processor 180 through a power supply management system, thereby implementing functions of managing charging, discharging, and power consumption through the power supply management system.

Although not shown, the mobile phone 100 may further include a camera, a bluetooth module, and the like, which are not described in detail here.

In the embodiment of the present invention, the processor 180 is further configured to log in to an application server by using a first user identifier through the RF circuit 110, and after logging in to the application server, the processor 180 is further configured to send preset information to the application server through the RF circuit 110, so that the application server determines, according to the preset information, whether a terminal is a communicable terminal, and send, according to a request of a calling user, a communication request including the first user identifier to the determined communicable terminal, where the terminal is a called terminal.

Further, the processor 180 is further configured to: if the terminal is in a non-login and network connected state, and the application server determines that the terminal is a communicable terminal, receive, through the RF circuit 110, the communication request including the first user identifier and sent according to the request of the calling user by the application server.

The preset information includes: first instruction information used for indicating whether a terminal in a login state or non-login state is a communicable terminal; or, second instruction information used for indicating whether a terminal in a network disconnected state or network connected state is a communicable terminal; or, third instruction information used for indicating that if location information of a terminal is within a preset range, the terminal is a communicable terminal; or, fourth instruction information used for indicating that if a network environment of a terminal conforms to a preset condition, the terminal is a communicable terminal.

In the embodiment of the present invention, after logging in to an application server, a terminal can send preset information to the application server, so that the application server can determine, according to the preset information, whether the terminal is a communicable terminal, and send, according to a request of a calling user, a communication request including a first user identifier to the determined communicable terminal. Therefore, when being in a non-login state, the terminal is still enabled to receive the communication request sent according to the request of the calling user by the application server, so as to optimize user experience.

Through the description of the foregoing implementation manners, a person skilled in the art may clearly understand that the present invention may be implemented by using hardware, software or firmware, or a combination thereof. If software is used for implementation, the foregoing functions may be stored in a computer readable medium or as one or more instructions or codes on a computer readable medium for transmission. The computer readable medium includes a computer storage medium and a communication medium, where the communication medium includes any medium which is convenient for transferring a computer program from a place to another place. The storage medium may be any available medium that can be accessed by a computer. For example, the computer readable medium may include, but not limited to, a RAM, a ROM, an EEPROM, a CD-ROM or other optical disk storage, magnetic disk storage or other magnetic storage device, or any other medium that can be used to carry or store desired program codes in a form of instructions or data structures and that can be accessed by a computer. In addition, any connection may appropriately be used as a computer readable medium. For example, if the software is transmitted from a website, server, or other remote sources by using a coaxial cable, fiber optic cable, twisted pair, digital subscriber line (DSL), or wireless technologies such as infrared, radio, and microwave, the coaxial cable, fiber optic cable, twisted pair, DSL, or wireless technologies such as infrared, radio, and microwave are included in the definition of the medium. A disk (Disk) and disc (disc), as used in the present invention, include a compact disc (CD), a laser disc, an optical disc, a digital versatile disc (DVD), a floppy disk and a Blu-ray disc, where disks usually reproduce data magnetically, while discs reproduce data optically with lasers. The foregoing combination should also be included in the protection scope of the computer readable medium.

In conclusion, the preceding description is merely exemplary embodiments of the present invention, but is not intended to limit the protection scope of the present invention. Any modification, equivalent replacement, or improvement made within the principle of the present invention shall fall within the protection scope of the present invention.

## Claims

1. A communication processing method, comprising:
receiving (101), by an application server, a communication request comprising a called user identifier and sent by a calling user, wherein the calling user is logged in to the application server;
searching (102) by the application server, according to the called user identifier, for all terminals corresponding to the called user identifier, wherein the all terminals comprise a terminal through which a called user has logged in to the application server by using the called user identifier and the called user does not log in to the application server currently, wherein the all terminals further comprise a terminal through which the called user log in to the application server currently, and wherein the application server is maintaining information of the called user about performing login through a plurality of terminals by learning one or more terminals through which the called user currently logs in, and learning one or more terminals through which the called user previously logged in; and
sending (103), by the application server, the communication request to all communicable terminals of the all terminals, wherein a communicable terminal is a terminal capable of receiving a communication request.

2. The method according to claim 1, wherein
the all communicable terminals are the all terminals.

3. The method according to claim 1, wherein before the sending (101), by the application server, the communication request to all communicable terminals of the all terminals, the method further comprises:
searching for (305), by the application server, all communicable terminals of the all terminals according to each piece of preset information received from the all terminals, wherein each terminal of the all terminals corresponds to one piece of the preset information, wherein the preset information is used for indicating whether a terminal is a communicable terminal.

4. The method according to claim 3, wherein the preset information comprises:
first instruction information used for indicating whether a terminal in a login state or non-login state is a communicable terminal; or
second instruction information used for indicating whether a terminal in a network disconnected state or network connected state is a communicable terminal; or
third instruction information used for indicating that if location information of a terminal is within a preset range, the terminal is a communicable terminal; or
fourth instruction information used for indicating that if a network environment of a terminal conforms to a preset condition, the terminal is a communicable terminal.

5. The method according to any one of claims 1 to 4, wherein the sending (103), by the application server, the communication request to all communicable terminals of the all terminals comprises:
sending (306), by the application server, the communication request to the all communicable terminals simultaneously; or
sending (306), by the application server, the communication request sequentially to each terminal of the all communicable terminals according to a preset sequence and a preset time interval until the communication request is responded.

6. An application server (700), comprising:
a first receiving module (71), configured to receive a communication request comprising a called user identifier and sent by a calling user, wherein the calling user is logged in to the application server;
a first searching module (73), configured to search, according to the called user identifier received by the first receiving module (71), for all terminals corresponding to the called user identifier, wherein the all terminals comprise a terminal through which a called user has logged in to the application server by using the called user identifier and the called user does not log in to the application server currently, wherein the all terminals further comprise a terminal through which the called user log in to the application server currently, and wherein the application server is configured to maintain information of the called user about performing login through a plurality of terminals by learning one or more terminals through which the called user currently logs in, and learning one or more terminals through which the called user previously logged in; and
a first sending module (75), configured to send the communication request to all communicable terminals of the all terminals found, through searching, by the first searching module (73), wherein a communicable terminal is a terminal capable of receiving a communication request.

7. The application server according to claim 6, wherein the all communicable terminals are the all terminals.

8. The application server according to claim 6, further comprising: a second searching module (77), wherein
the second searching module (77) is configured to, before the first sending module (75) sends the communication request to all communicable terminals of the all terminals, search for all communicable terminals of the all terminals according to each piece of preset information received from the all terminals, wherein each terminal of the all terminals corresponds to one piece of the preset information, wherein the preset information is used for indicating whether a terminal is a communicable terminal.

9. The application server according to any one of claims 6 to 8, wherein the first sending module (75) comprises: a sending unit (751) and a sending instruction unit (753), wherein
the sending unit (751) is configured to send the communication request to the all communicable terminals; and
the sending instruction unit (753) is configured to instruct the sending unit (751) to send the communication request to the all communicable terminals simultaneously; or configured to instruct the sending unit (751) to send the communication request sequentially to each terminal of the all communicable terminals according to a preset sequence and a preset time interval until the communication request is responded.

## Patentansprüche

1. Kommunikationsverarbeitungsverfahren, das umfasst:
Empfangen (101), durch einen Anwendungsserver, einer Kommunikationsanforderung, die eine Kennung eines angerufenen Benutzers umfasst und durch einen anrufenden Benutzer gesendet wird, wobei der anrufende Benutzer an dem Anwendungsserver angemeldet ist;
Suchen (102), durch den Anwendungsserver, gemäß der Kennung des angerufenen Benutzers, nach sämtlichen Endgeräten, die der Kennung des angerufenen Benutzers entsprechen, wobei die sämtlichen Endgeräte ein Endgerät umfassen, über das sich ein angerufener Benutzer an dem Anwendungsserver unter Verwendung der Kennung des angerufenen Benutzers angemeldet hat und der angerufene Benutzer derzeit nicht an dem Anwendungsserver angemeldet ist, wobei die sämtlichen Endgeräte ferner ein Endgerät umfassen, über das der angerufene Benutzer derzeit an dem Anwendungsserver angemeldet ist, und wobei der Anwendungsserver eine Information des angerufenen Benutzers über ein Durchführen einer Anmeldung über eine Mehrzahl von Endgeräten durch Erlernen eines oder mehrerer Endgeräte, über die der angerufene Benutzer derzeit angemeldet ist, und Erlernen eines oder mehrerer Endgeräte, über die sich der angerufene Benutzer früher angemeldet hat, pflegt; und
Senden (103), durch den Anwendungsserver, der Kommunikationsanforderung an sämtliche kommunikationsfähige Endgeräte der sämtlichen Endgeräte, wobei ein kommunikationsfähiges Endgerät ein Endgerät ist, das in der Lage ist, eine Kommunikationsanforderung zu empfangen.

2. Verfahren nach Anspruch 1, wobei
die sämtlichen kommunikationsfähigen Endgeräte die sämtlichen Endgeräte sind.

3. Verfahren nach Anspruch 1, wobei vor dem Senden (101), durch den Anwendungsserver, der Kommunikationsanforderung an sämtliche kommunikationsfähige Endgeräte der sämtlichen Endgeräte, das Verfahren ferner umfasst:
Suchen nach (305), durch den Anwendungsserver, sämtlichen kommunikationsfähigen Endgeräten der sämtlichen Endgeräte gemäß jedem Teil an vorab festgelegter Information, die von den sämtlichen Endgeräten empfangen wurde, wobei jedes Endgerät der sämtlichen Endgeräte einem Teil der vorab festgelegten Information entspricht, wobei die vorab festgelegte Information verwendet wird, um anzuzeigen, ob ein Endgerät ein kommunikationsfähiges Endgerät ist.

4. Verfahren nach Anspruch 3, wobei die vorab festgelegte Information umfasst:
eine erste Anweisungsinformation, die verwendet wird, um anzuzeigen, ob ein Endgerät in einem angemeldeten Zustand oder nicht angemeldeten Zustand ein kommunikationsfähiges Endgerät ist; oder
eine zweite Anweisungsinformation, die verwendet wird, um anzuzeigen, ob ein Endgerät in einem von einem Netzwerk getrennten Zustand oder mit einem Netzwerk verbundenen Zustand ein kommunikationsfähiges Endgerät ist; oder
eine dritte Anweisungsinformation, die verwendet wird, um anzuzeigen, dass, wenn eine Standortinformation eines Endgeräts in einem vorab festgelegten Bereich liegt, das Endgerät ein kommunikationsfähiges Endgerät ist; oder
eine vierte Anweisungsinformation, die verwendet wird, um anzuzeigen, dass, wenn eine Netzwerkumgebung eines Endgeräts eine vorab festgelegte Bedingung erfüllt, das Endgerät ein kommunikationsfähiges Endgerät ist.

5. Verfahren nach einem der Ansprüche 1 bis 4, wobei das Senden (103), durch den Anwendungsserver, der Kommunikationsanforderung an sämtliche kommunikationsfähige Endgeräte der sämtlichen Endgeräte umfasst:
Senden (306), durch den Anwendungsserver, der Kommunikationsanforderung an die sämtlichen kommunikationsfähigen Endgeräte gleichzeitig; oder
Senden (306), durch den Anwendungsserver, der Kommunikationsanforderung nacheinander an jedes Endgerät der sämtlichen kommunikationsfähigen Endgeräte gemäß einer vorab festgelegten Reihenfolge und einem vorab festgelegten Zeitintervall, bis die Kommunikationsanforderung beantwortet wird.

6. Anwendungsserver (700), der umfasst:
ein erstes Empfangsmodul (71), das ausgelegt ist, eine Kommunikationsanforderung zu empfangen, die eine Kennung eines angerufenen Benutzers umfasst und durch einen anrufenden Benutzer gesendet ist, wobei der anrufende Benutzer an dem Anwendungsserver angemeldet ist;
ein erstes Suchmodul (73), das ausgelegt ist, gemäß der durch das erste Empfangsmodul (71) empfangenen Kennung des angerufenen Benutzers, nach sämtlichen Endgeräten zu suchen, die der Kennung des angerufenen Benutzers entsprechen, wobei die sämtlichen Endgeräte ein Endgerät umfassen, über das sich ein angerufener Benutzer an dem Anwendungsserver unter Verwendung der Kennung des angerufenen Benutzers angemeldet hat und der angerufene Benutzer derzeit nicht an dem Anwendungsserver angemeldet ist, wobei die sämtlichen Endgeräte ferner ein Endgerät umfassen, über das der angerufene Benutzer derzeit an dem Anwendungsserver angemeldet ist, und wobei der Anwendungsserver ausgelegt ist, eine Information des angerufenen Benutzers über ein Durchführen einer Anmeldung über eine Mehrzahl von Endgeräten durch Erlernen eines oder mehrerer Endgeräte, über die der angerufene Benutzer derzeit angemeldet ist, und Erlernen eines oder mehrerer Endgeräte, über die sich der angerufene Benutzer früher angemeldet hat, zu pflegen; und
ein erstes Sendemodul (75), das ausgelegt ist, die Kommunikationsanforderung an sämtliche kommunikationsfähige Endgeräte der sämtlichen Endgeräte, die durch Suchen, durch das erste Suchmodul (73) gefunden wurden, zu senden, wobei ein kommunikationsfähiges Endgerät ein Endgerät ist, das in der Lage ist, eine Kommunikationsanforderung zu empfangen.

7. Anwendungsserver nach Anspruch 6, wobei die sämtlichen kommunikationsfähigen Endgeräte die sämtlichen Endgeräte sind.

8. Anwendungsserver nach Anspruch 6, ferner umfassend: ein zweites Suchmodul (77), wobei
das zweite Suchmodul (77) ausgelegt ist, bevor das erste Sendemodul (75) die Kommunikationsanforderung an sämtliche kommunikationsfähige Endgeräte der sämtlichen Endgeräte sendet, nach sämtlichen kommunikationsfähigen Endgeräten der sämtlichen Endgeräte gemäß jedem Teil an vorab festgelegter Information zu suchen, die von den sämtlichen Endgeräten empfangen wurde, wobei jedes Endgerät der sämtlichen Endgeräte einem Teil der vorab festgelegten Information entspricht, wobei die vorab festgelegte Information verwendet wird, um anzuzeigen, ob ein Endgerät ein kommunikationsfähiges Endgerät ist.

9. Anwendungsserver nach einem der Ansprüche 6 bis 8, wobei das erste Sendemodul (75) umfasst: eine Sendeeinheit (751) und eine Sendeanweisungseinheit (753), wobei die Sendeeinheit (751) ausgelegt ist, die Kommunikationsanforderung an die sämtlichen kommunikationsfähigen Endgeräte zu senden; und
die Sendeanweisungseinheit (753) ausgelegt ist, die Sendeeinheit (751) anzuweisen, die Kommunikationsanforderung an die sämtlichen kommunikationsfähigen Endgeräte gleichzeitig zu senden; oder ausgelegt ist, die Sendeeinheit (751) anzuweisen, die Kommunikationsanforderung nacheinander an jedes Endgerät der sämtlichen kommunikationsfähigen Endgeräte gemäß einer vorab festgelegten Reihenfolge und einem vorab festgelegten Zeitintervall zu senden, bis die Kommunikationsanforderung beantwortet wird.

## Revendications

1. Procédé de traitement de communication, comprenant les étapes consistant à :
recevoir (101), par un serveur d'application, une demande de communication comprenant un identifiant d'utilisateur appelé et envoyée par un utilisateur appelant, l'utilisateur appelant étant connecté au serveur d'application ;
rechercher (102), par le serveur d'application, selon l'identifiant d'utilisateur appelé, la totalité des terminaux correspondant à l'identifiant d'utilisateur appelé, ladite totalité des terminaux comprenant un terminal par l'intermédiaire duquel un utilisateur appelé s'est connecté au serveur d'application au moyen de l'identifiant d'utilisateur appelé, l'utilisateur appelé n'étant actuellement pas connecté au serveur d'application, ladite totalité des terminaux comprenant en outre un terminal par l'intermédiaire duquel l'utilisateur appelé est actuellement connecté au serveur d'application, et le serveur d'application conservant des informations de l'utilisateur appelé concernant la réalisation d'une connexion par l'intermédiaire d'une pluralité de terminaux en apprenant un ou plusieurs terminaux par l'intermédiaire desquels l'utilisateur appelé est actuellement connecté, et en apprenant un ou plusieurs terminaux par l'intermédiaire desquels l'utilisateur appelé s'est connecté précédemment ; et
envoyer (103), par le serveur d'application, la demande de communication à la totalité des terminaux communicables parmi ladite totalité des terminaux, un terminal communicable étant un terminal capable de recevoir une demande de communication.

2. Procédé selon la revendication 1, dans lequel
ladite totalité des terminaux communicables sont ladite totalité des terminaux.

3. Procédé selon la revendication 1, le procédé comprenant en outre, avant l'envoi (101), par le serveur d'application, de la demande de communication à la totalité des terminaux communicables parmi ladite totalité des terminaux, l'étape consistant à :
rechercher (305), parle serveur d'application, la totalité des terminaux communicables parmi ladite totalité des terminaux selon chacune des informations prédéfinies reçues en provenance de ladite totalité des terminaux, chaque terminal de ladite totalité des terminaux correspondant à une des informations prédéfinies, les informations prédéfinies étant utilisées pour indiquer si un terminal est un terminal communicable.

4. Procédé selon la revendication 3, dans lequel les informations prédéfinies comprennent :
une première information d'instruction utilisée pour indiquer si un terminal dans un état de connexion ou un état de non-connexion est un terminal communicable ; ou
une deuxième information d'instruction utilisée pour indiquer si un terminal dans un état de réseau déconnecté ou un état de réseau connecté est un terminal communicable ; ou
une troisième information d'instruction utilisée pour indiquer que si une information de localisation d'un terminal est dans une plage prédéfinie, le terminal est un terminal communicable ; ou
une quatrième information d'instruction utilisée pour indiquer que si un environnement de réseau d'un terminal satisfait à une condition prédéfinie, le terminal est un terminal communicable.

5. Procédé selon l'une quelconque des revendications 1 à 4, dans lequel l'envoi (103), par le serveur d'application, de la demande de communication à la totalité des terminaux communicables parmi ladite totalité des terminaux comprend les étapes consistant à :
envoyer (306), par le serveur d'application, la demande de communication à la totalité des terminaux communicables ; ou
envoyer (306) séquentiellement, par le serveur d'application, la demande de communication à chaque terminal de ladite totalité des terminaux communicables selon une séquence prédéfinie et un intervalle de temps prédéfini jusqu'à ce la demande de communication fasse l'objet d'une réponse.

6. Serveur d'application (700), comprenant :
un premier module de réception (71), configuré pour recevoir une demande de communication comprenant un identifiant d'utilisateur appelé et envoyée par un utilisateur appelant, l'utilisateur appelant étant connecté au serveur d'application ;
un premier module de recherche (73), configuré pour rechercher, selon l'identifiant d'utilisateur appelé reçu par le premier module de réception (71), la totalité des terminaux correspondant à l'identifiant d'utilisateur appelé, ladite totalité des terminaux comprenant un terminal par l'intermédiaire duquel un utilisateur appelé s'est connecté au serveur d'application au moyen de l'identifiant d'utilisateur appelé, l'utilisateur appelé n'étant actuellement pas connecté au serveur d'application, ladite totalité des terminaux comprenant en outre un terminal par l'intermédiaire duquel l'utilisateur appelé est actuellement connecté au serveur d'application, et le serveur d'application étant configuré pour conserver des informations de l'utilisateur appelé concernant la réalisation d'une connexion par l'intermédiaire d'une pluralité de terminaux en apprenant un ou plusieurs terminaux par l'intermédiaire desquels l'utilisateur appelé est actuellement connecté, et en apprenant un ou plusieurs terminaux par l'intermédiaire desquels l'utilisateur appelé s'est connecté précédemment ; et
un premier module d'envoi (75), configuré pour envoyer la demande de communication à la totalité des terminaux communicables parmi ladite totalité des terminaux trouvés, par l'intermédiaire d'une recherche, par le premier module de recherche (73), un terminal communicable étant un terminal capable de recevoir une demande de communication.

7. Serveur d'application selon la revendication 6, dans lequel la totalité des terminaux communicables sont ladite totalité des terminaux.

8. Serveur d'application selon la revendication 6, comprenant en outre : un second module de recherche (77),
le second module de recherche (77) étant configuré pour, avant l'envoi, par le premier module d'envoi (75), de la demande de communication à la totalité des terminaux communicables parmi ladite totalité des terminaux, rechercher la totalité des terminaux communicables parmi ladite totalité des terminaux selon chacune des informations prédéfinies reçues en provenance de ladite totalité des terminaux, chaque terminal de ladite totalité des terminaux correspondant à une des informations prédéfinies, les informations prédéfinies étant utilisées pour indiquer si un terminal est un terminal communicable.

9. Serveur d'application selon l'une quelconque des revendications 6 à 8, dans lequel le premier module d'envoi (75) comprend: une unité d'envoi (751) et une unité d'instruction d'envoi (753),
l'unité d'envoi (751) étant configurée pour envoyer la demande de communication à ladite totalité des terminaux communicables ; et
l'unité d'instruction d'envoi (753) étant configurée pour donner l'instruction à l'unité d'envoi (751) d'envoyer simultanément la demande de communication à ladite totalité des terminaux communicables ; ou configurée pour donner l'instruction à l'unité d'envoi (751) d'envoyer séquentiellement la demande de communication à chaque terminal de ladite totalité des terminaux communicables selon une séquence prédéfinie et un intervalle de temps prédéfini jusqu'à ce la demande de communication fasse l'objet d'une réponse.
